# EUROPEAN PATENT APPLICATION

(11) **EP 2 374 563 A1**
(43) Date of publication of application: **12.10.2011**
(21) Application number: 10161773.6
(22) Date of filing: 03.05.2010
(51) Int. Cl.: B23B 49/00, B23B 39/00

(54) **Display structure of a drilling machine**

(30) Priority: 09.04.2010 TW 099206298
(71) Applicant: Lin, Shun Sheng, Taichung County 412 (TW)
(72) Inventor: Lin, Shun Sheng, Taichung County 412 (TW)
(74) Representative: Beck & Rössig European Patent Attorneys

(57) **Abstract**

A display structure of a drilling machine includes a digital display control assembly (20) which includes a liquid crystal control panel (21), a control circuit board (22), a displacement induction controller (23) and a battery seat (24). The liquid crystal control panel (21) is electrically connected with the control circuit board (22). The control circuit board (22) is electrically connected with the displacement induction controller (23). The control circuit board (22) is further electrically connected with the battery seat (24). The displacement induction controller (23) includes an engaging protrusion (230) to engage with a displacement control linking seat (11) of a feed guide body (10). The liquid crystal control panel (21) of the digital display control assembly (20) is adapted to input control signals, such as an initial point, a terminal point and a feed unit, and the control signals are sent to the displacement induction controller (23) via the control circuit board (22). The displacement induction controller (23) receives the signals and returns the signals to the control circuit board (22) for controlling the upward/downward movement of the feed guide body (10). After setting the digital display control assembly (20), the feed guide body (10) can carry out the same feed many times, controlling the feed depth and providing uniformity of drilling.

## Description

### BACKGROUND OF THE INVENTION

### 1. Field of the Invention

The present invention relates to a display structure of a drilling machine.

### 2. Description of the Prior Art

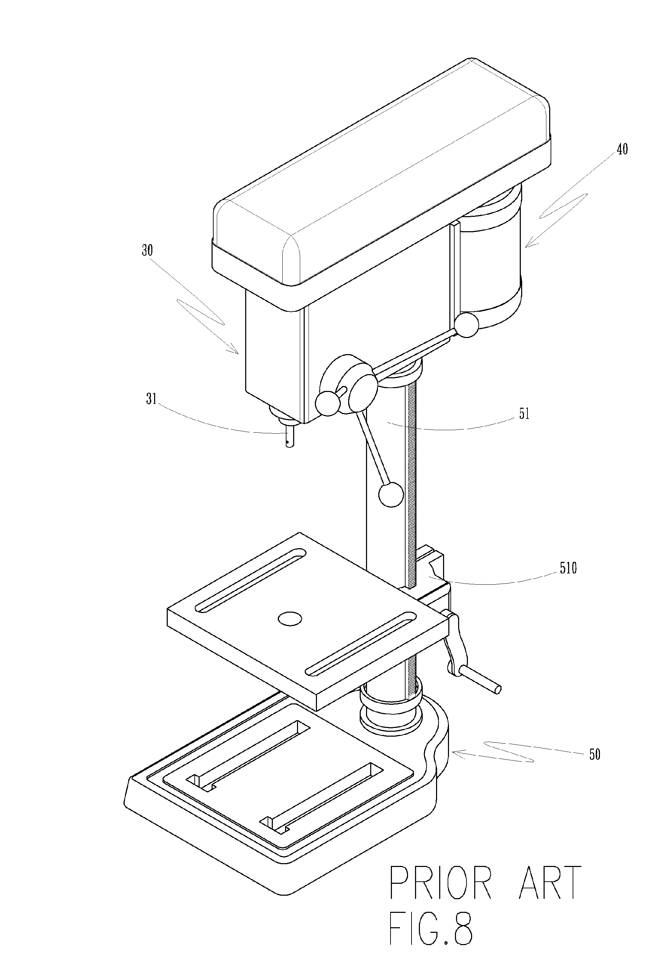

Fig. 8 shows a conventional drilling machine comprising a feed device 30, a driving control unit 40 and a main base 50. The feed device 30 comprises a drilling head 31. The main base 50 comprises a support rod 51 which is slideably connected with a stand 510. The stand 510 can be adjusted upward or downward relative to the support rod 51. The driving control unit 40 and the feed device 30 are disposed on top of the support rod 51 of the main base 50. The driving control unit 40 drives the driving head 31 of the feed device 30 to feed and drill. However, the conventional drilling machine has some shortcomings:
1. Lack of controllability: The driving control unit drives the driving head of the feed device to feed and drill. The feed depth of the feed device is controlled manually, which doesn't have a good controllability for the feed depth.
2. Lack of uniformity: The driving control unit drives the driving head of the feed device to feed and drill. The feed depth of the feed device is controlled manually. The depth of drilling may have a difference after drilling many times. There is a lack of uniformity in drilling.

Accordingly, the inventor of the present invention has devoted himself based on his many years of practical experiences to improve the aforesaid problems of the conventional drilling machine.

### SUMMARY OF THE INVENTION

The primary object of the present invention is to improve a display structure of a drilling machine with rgeard to controllability and uniformity.

This technical problem is solved by a display structure of a drilling machine as defined in the claims.

The invention provides a display structure of a drilling machine which comprises a digital display control assembly. The digital display control assembly comprises a liquid crystal control panel, a control circuit board, a displacement induction controller and a battery seat. The liquid crystal control panel is electrically connected with the control circuit board. The control circuit board is electrically connected with the displacement induction controller. The control circuit board is further electrically connected with the battery seat. The displacement induction controller includes an engaging protrusion to engage with a displacement control linking seat of a feed guide body. The liquid crystal control panel of the digital display control assembly is adapted to input control signals, such as an initial point, a terminal point and a feed unit, and the control signals are sent to the displacement induction controller via the control circuit board. The displacement induction controller receives the signals and returns the signals to the control circuit board for controlling the upward/downward movement of the feed guide body. After setting the digital display control assembly, the feed guide body can carry out the same feed many times, controlling the feed depth and providing uniformity of drilling.

### BRIEF DESCRIPTION OF THE DRAWINGS

Fig. 1 is a partially perspective view according to a first embodiment of the present invention;
Fig. 2 is a partially exploded view according to the first embodiment of the present invention;
Fig. 3 is a perspective view with a portion exploded according to the first embodiment of the present invention;
Fig. 4 is a schematic view showing the drilling machine in an advancing operation according to the first embodiment of the present invention;
Fig. 5 is a schematic view showing the drilling machine in a retracting operation according to the first embodiment of the present invention;
Fig. 6 is a front view according to the first embodiment of the present invention;
Fig. 7 is a partially exploded view according to a second embodiment of the present invention; and
Fig. 8 is a perspective view of a conventional drilling machine.

### DETAILED DESCRIPTION OF THE PREFERRED EMBODIMENTS

Embodiments of the present invention will now be described, by way of example only, with reference to the accompanying drawings.

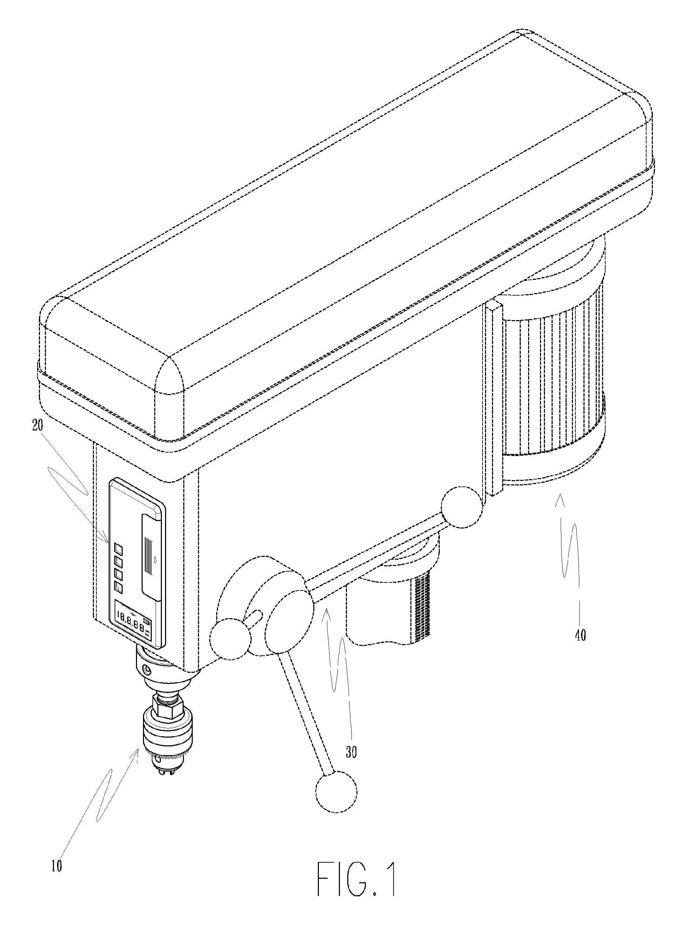

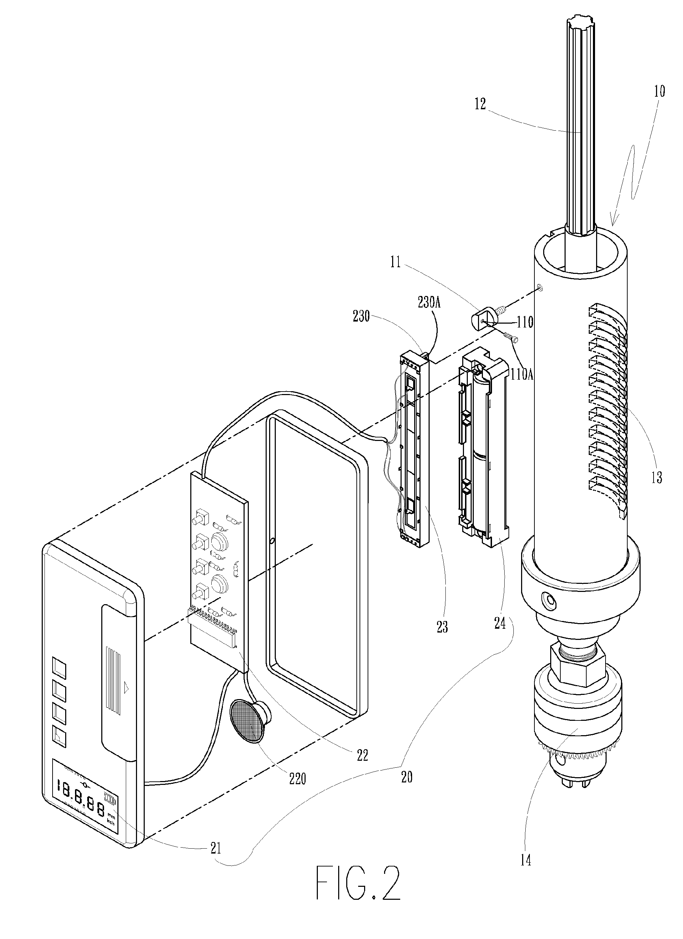

As shown in Fig. 1 and Fig. 2, a display structure of a drilling machine according to a first embodiment of the present invention comprises a feed guide body 10 and a digital display control assembly 20.

The feed guide body 10 comprises a displacement control linking seat 11 at a front side thereof. The displacement control linking seat 11 in a semi-cylinder shape has a first connecting hole 110 for insertion of a connecting member 110A. A guide spindle 12 is provided on top of feed guide body 10. The feed guide body 10 has a plurality of engaging portions 13 which are transversely disposed on a rear side of the feed guide body 10. The feed guide body 10 comprises a drilling head locking portion 14 at a lower end thereof.

The digital display control assembly 20 comprises a liquid crystal control panel 21, a control circuit board 22, a displacement induction controller 23, and a battery seat 24. The control circuit board 22 is electrically connected with a buzzer 220. The displacement induction controller 23 comprises an engaging protrusion 230 which has a second connecting hole 230A. The liquid crystal control panel 21 is electrically connected with the control circuit board 22. The control circuit board 22 is electrically connected with the displacement induction controller 23. The control circuit board 22 is also electrically connected with the battery seat 24. The engaging protrusion 230 of the displacement induction controller 23 is engaged with the displacement control linking seat 11 of the feed guide body 10. The second connecting hole 230A of the engaging protrusion 230 is aligned with the first connecting hole 110 of the displacement control linking seat 11 of the feed guide body 10 and locked by the connecting member 110A. Accordingly, the display structure of the drilling machine of the present invention is assembled.

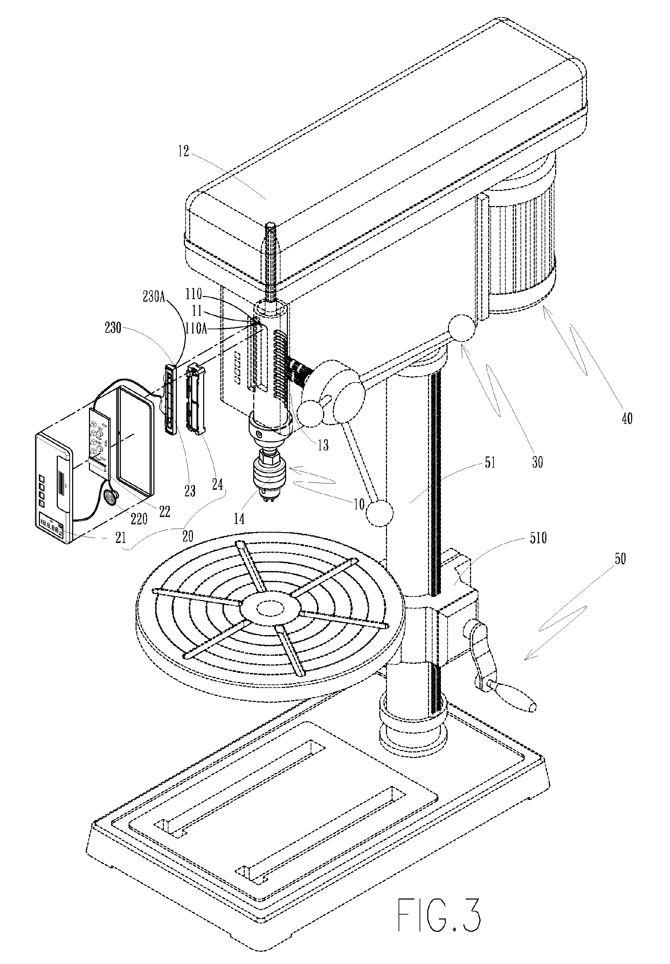

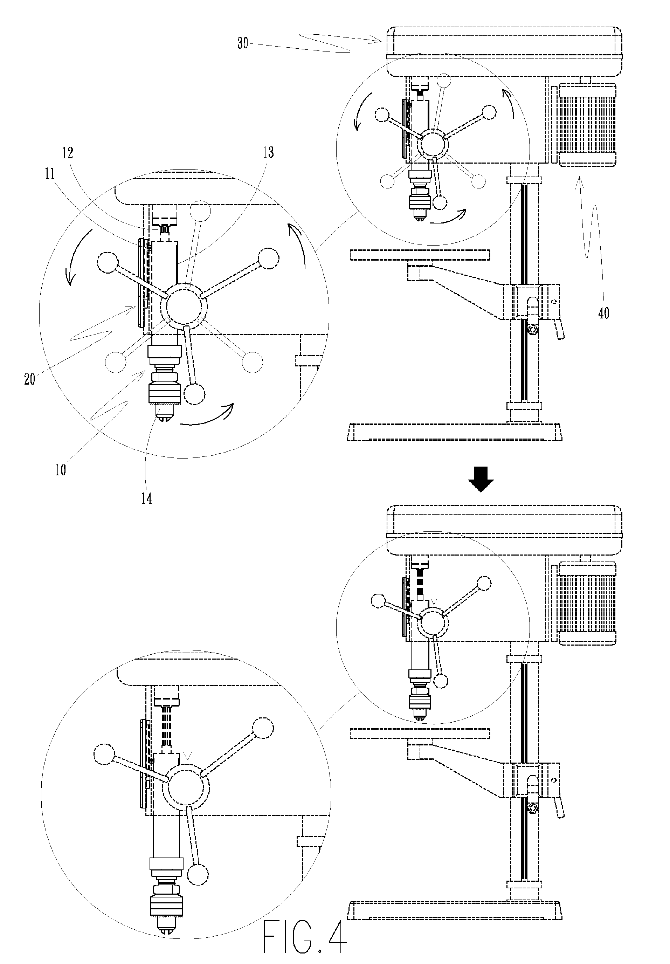

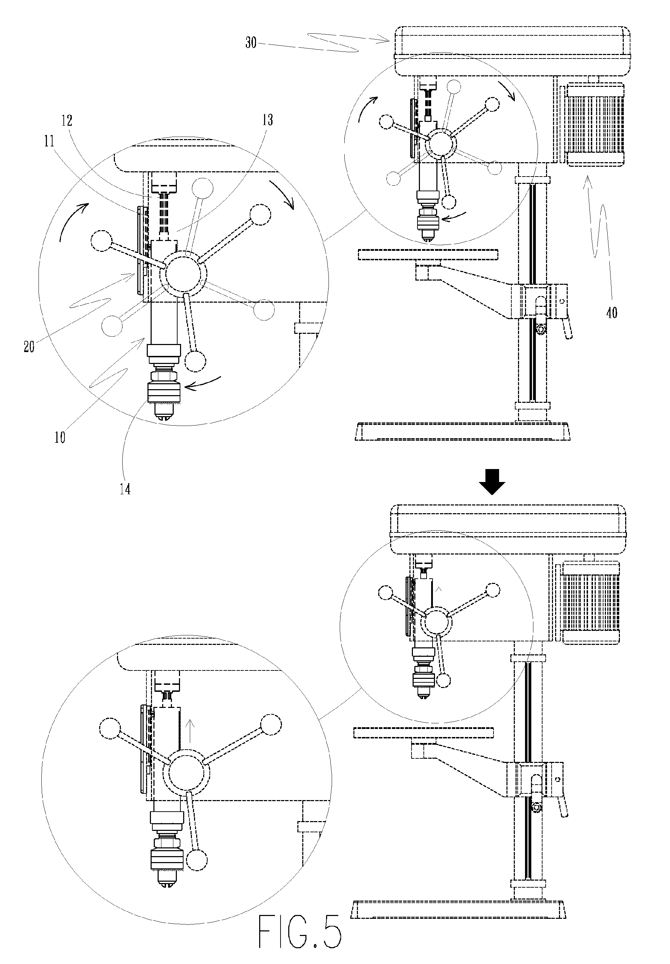

Fig. 3 is a partially exploded view of the display structure of the drilling machine of the present invention. Fig. 4 is a schematic view showing the drilling machine in an advancing operation. Fig. 5 is a schematic view showing the drilling machine in a retracting operation. The feed guide body 10 and the digital display control assembly 20 are coupled to a feed device 30. The feed device 30 is connected with a driving control unit 40 and a main base 50. The main body 50 comprises a support rod 51 which is provided with a movable stand 510. The driving control unit 40 drives the guide spindle 12 of the feed guide body 10. The liquid crystal control panel 21 is electrically connected with the control circuit board 22. The control circuit board 22 is electrically connected with the displacement induction controller 23. The control circuit board 22 is also electrically connected with the battery seat 24. The engaging protrusion 230 of the displacement induction controller 23 is engaged with the displacement control linking seat 11 of the feed guide body 10. The liquid crystal control panel 21 of the digital display control assembly 20 is adapted to input control signals, such as an initial point, a terminal point and a feed unit, and the control signals are sent to the displacement induction controller 23 via the control circuit board 22. The displacement induction controller 23 receives the signals and returns the signals to the control circuit board 22 for controlling the upward/downward movement of the feed guide body 10. After setting the digital display control assembly 20, the feed guide body 10 can carry out the same feed many times, controlling the feed depth well and providing uniformity of drilling.

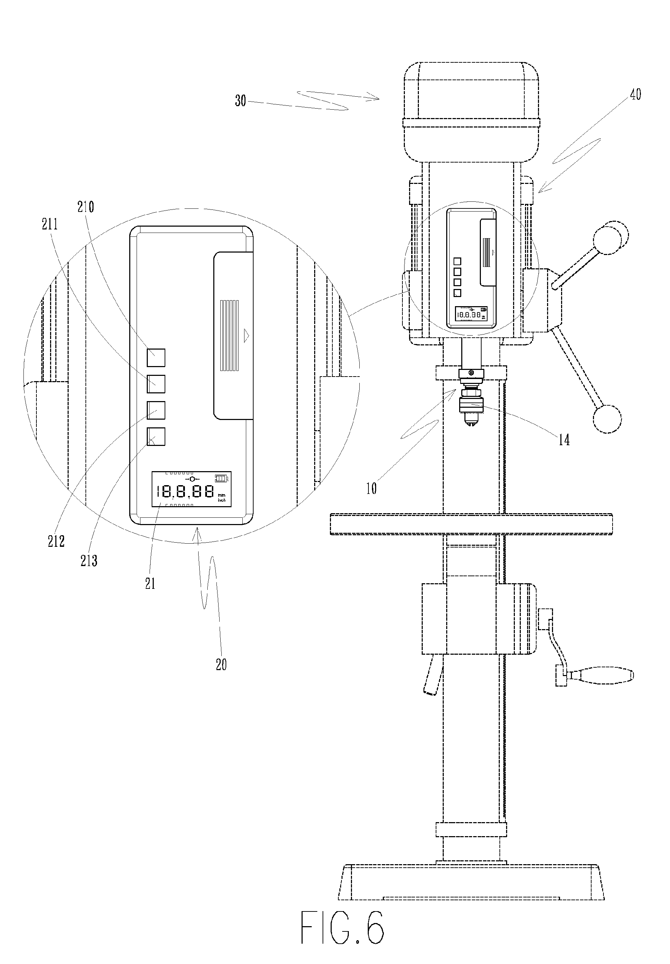

Fig. 6 is a front view showing the display structure of the drilling machine of the present invention coupled with the digital display control assembly 20. The liquid crystal control panel 21 of the digital display control assembly 20 further comprises a start switch 210, a feed unit control switch 211, an initial point switch 212 and a terminal point switch 213. The start switch 210 is pressed to turn on/off the machine. The start switch 210 is pressed for three seconds to delete the memory. The feed unit control switch 211 is pressed to select the feed unit in millimeter of inch. The initial point switch 212 and the terminal point switch 213 are adapted to set the feed depth of the feed guide body 10.

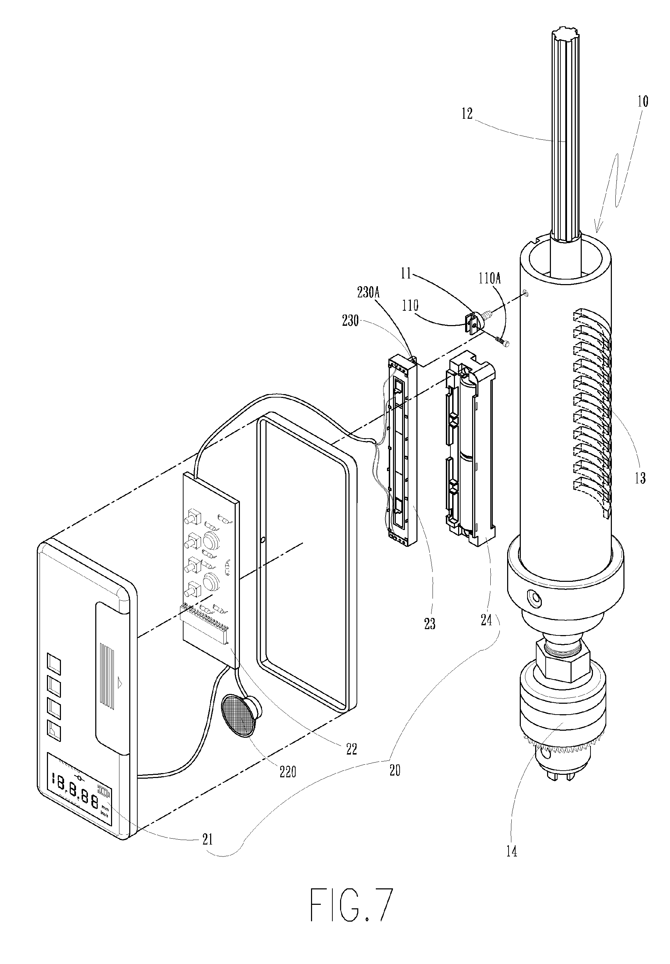

Fig. 7 shows the display structure of the drilling machine according to a second embodiment of the present invention, which is substantially similar to the first embodiment as shown in Fig. 1 to Fig. 6 with the exceptions described hereinafter. The displacement control linking seat 11 of the feed guide body 10 is in a U shape and has a pair of first connecting holes 110 at two sides thereof for insertion of the connecting member 110A. The U-shaped displacement control linking seat 11 is adapted to engage with the engaging protrusion 230 of the displacement induction controller 23. The pair of first connecting holes 110 of the displacement control linking seat 11 of the feed guide body 10 is aligned with the second connecting hole 230A of the engaging protrusion 230 and locked by the connecting member 110A.

The present invention has some advantages as follows:
1. Providing a better controllability for the feed depth: The liquid crystal control panel of the digital display control assembly is adapted to input the control signals, such as the initial point, the terminal point and the feed unit, and the control signals are sent to the displacement induction controller via the control circuit board. The displacement induction controller receives the signals and returns the signals to the control circuit board for controlling the upward/downward movement of the feed guide body.
2. Providing uniformity of drilling: After setting the digital display control assembly, the feed guide body can carry out the same feed many times.

Although particular embodiments of the present invention have been described in detail for purposes of illustration, various modifications and enhancements may be made without departing from the scope of the claims.

## Claims

1. A display structure of a drilling machine, comprising:
a feed guide body (10), the feed guide body (10) comprising a displacement control linking seat (11); and
a digital display control assembly (20), the digital display control assembly (20) comprising a liquid crystal control panel (21), a control circuit board (22) and a displacement induction controller (23), the displacement induction controller (23) comprising an engaging protrusion (230), the liquid crystal control panel (21) being electrically connected with the control circuit board (22), the control circuit board (22) being electrically connected with the displacement induction controller (23), the control circuit board (22) being further electrically connected with a power source, the engaging protrusion (230) of the displacement induction controller (23) being engaged with the displacement control linking seat (11) of the feed guide body (10).

2. The display structure of a drilling machine as claimed in claim 1, wherein the displacement control linking seat (11) is disposed at a front side of the feed guide body (10).

3. The display structure of a drilling machine as claimed in claim 1 or 2, wherein a guide spindle (12) is provided on top of the feed guide body (10).

4. The display structure of a drilling machine as claimed in one of claims 1 to 3, wherein the feed guide body (10) has a plurality of engaging portions (13) which are transversely disposed on a rear side of the feed guide body (10).

5. The display structure of a drilling machine as claimed in one of claims 1 to 4, wherein the feed guide body (10) comprises a drilling head locking portion (14) at a lower end thereof.

6. The display structure of a drilling machine as claimed in one of claims 1 to 5, wherein the power source is a battery seat (24) which is electrically connected with the control circuit board (22).

7. The display structure of a drilling machine as claimed in one of claims 1 to 6, wherein the control circuit board (22) is electrically connected with a buzzer (220).

8. The display structure of a drilling machine as claimed in one of claims 1 to 7, wherein the liquid crystal control panel (21) comprises a start switch (210), a feed unit control switch (211), an initial point switch (212) and a terminal point switch (213).

9. The display structure of a drilling machine as claimed in one of claims 1 to 8, wherein the displacement control linking seat (11) in a semi-cylinder shape has a first connecting hole (110) for insertion of a connecting member (110A), the engaging protrusion (230) of the displacement induction controller (23) having a second connecting hole (230A), the second connecting hole (230A) of the engaging protrusion (230) of the displacement induction controller (23) being aligned with the first connecting hole (110) of the displacement control linking seat (11) and locked by the connecting member (110A).

10. The display structure of a drilling machine as claimed in one of claims 1 to 9, wherein the displacement control linking seat (11) in a U shape has a pair of first connecting holes (110) at two sides thereof for insertion of a connecting member (110A), the engaging protrusion (230) of the displacement induction controller (23) having a second connecting hole (230A), the pair of first connecting holes (110) of the displacement control linking seat (11) being aligned with the second connecting hole (230A) of the engaging protrusion (230) of the displacement induction controller (23) and locked by the connecting member (110A).
